# EUROPÄISCHE PATENTSCHRIFT

(11) **EP 1 457 654 B1**
(45) Veröffentlichungstag und Bekanntmachung des Hinweises auf die Patenterteilung: **03.05.2006**
(21) Anmeldenummer: 04090061.5
(22) Anmeldetag: 23.02.2004
(51) Int. Cl.: F02D 41/14, F01N 11/00, F02D 41/02

(54) **Verfahren zur Ermittlung der Sauerstoffspeicherfähigkeit von Katalysatoren in mehrflutigen Abgasanlagen sowie Vorrichtung zur Durchführung des Verfahrens**
Method of determining the oxygen storage capacity of catalysts in multiple exhaust gas systems and apparatus for carrying out the method
Procédé pour déterminer la capacité de stockage d'oxygène des catalyseurs dans des systèmes d'échappements multiples et dispositif pour la mise en oeuvre du procédé

(30) Priorität: 14.03.2003 DE 10312503
(43) Veröffentlichungstag der Anmeldung: 15.09.2004
(73) Patentinhaber: Volkswagen AG, 38436 Wolfsburg (DE)
(72) Erfinder: Pott, Ekkehard, Dr., 38518 Gifhorn (DE); Emmenthal, Thomas, 38444 Wolfsburg (DE); Thiele, Fred, 38471 Rühen (DE)
(74) Vertreter: Reinstädler, Diane

(56) Entgegenhaltungen:
- EP-A- 1 143 131
- US-B1- 6 470 674

## Beschreibung

Die Erfindung betrifft ein Verfahren zur Ermittlung der Sauerstoffspeicherfähigkeit von Katalysatoren in mehrflutigen Abgasanlagen mit nachgeschalteter, für die einzelnen Pfade unterschiedlich ausgelegter Sensorik mit den im Oberbegriff des Anspruchs 1 genannten Merkmalen sowie eine entsprechende Vorrichtung zur Durchführung des erfindungsgemäßen Verfahrens mit den im Oberbegriff des Anspruchs 8 genannten Merkmalen.

Zur Nachbehandlung von Abgasen von Verbrennungskraftmaschinen ist es allgemein üblich, diese katalytisch zu reinigen. Dazu wird das Abgas über mindestens einen Katalysator geleitet, der eine Konvertierung einer oder mehrerer Schadstoffkomponenten des Abgases vornimmt. Es sind unterschiedliche Arten von Katalysatoren bekannt. Oxidationskatalysatoren fördern die Oxidation von unverbrannten Kohlenwasserstoffen (HC) und Kohlenmonoxid (CO), während Reduktionskatalysatoren eine Reduzierung von Stickoxiden (NOₓ) des Abgases unterstützen. Zudem werden 3-Wege-Katalysatoren verwendet, um die Konvertierung der drei vorgenannten Komponenten (HC, CO, NOₓ) gleichzeitig zu katalysieren. Daneben sind auch Speicherkatalysatoren, beispielsweise NOₓ₋Speicherkatalysatoren, bekannt. Diese werden bei der Abgasreinigung von Verbrennungskraftmaschinen eingesetzt, die aus Gründen einer Verbrauchsoptimierung wenigstens zeitweise in einem mageren Betriebsmodus, das heißt mit einem sauerstoffreichen Abgas mit λ > 1, betrieben werden, wobei in hohem Maße Stickoxide NOₓ entstehen. Die Stickoxide NOₓ können bei einer katalytischen oxidativen Umsetzung von unverbrannten Kohlenwasserstoffen HC und Kohlenmonoxid CO nicht vollständig zu umweltneutralem Stickstoff umgesetzt werden. Zur Abhilfe werden vorgenannte NOₓ₋Speicherkatalysatoren in den Abgaskanälen von Verbrennungskraftmaschinen angeordnet, die in mageren Betriebsphasen NOₓ als Nitrat einlagem. Um NOₓ-Durchbrüche aufgrund eines vollbeladenen NOₓ-Speicherkatalysators zu vermeiden, muss der NOₓ₋Speicherkatalysator in wiederkehrenden Abständen regeneriert werden.

Zur Sicherstellung der Emissionen der Verbrennungskraftmaschinen, die in Kraftfahrzeugen verwendet werden, über die gesamte Fahrzeuglebensdauer ist eine Kenntnis des Katalysatoralterungszustandes hilfreich. Zur Ermittlung des Katalysatoralterungszustandes werden verschiedene Verfahren verwendet, zum Beispiel die Messung der NOₓ-Emissionen stromab eines NOₓ-Speicherkatalysators und der Vergleich mit den modellierten oder gemessenen Emissionen stromauf des Speicherkatalysators sowie dem modellierten Verhalten eines frischen Katalysators. Bekannt ist auch zur Erfassung der 3-Wege-Aktivität die Messung der Sauerstoffspeicherfähigkeit (OSC), üblicherweise durch Beaufschlagung eines Katalysators mit einer definierten Frequenz und Amplitude bei einem Mittelwert der Abgaszusammensetzung von Lambda = 1. Frequenz und Amplitude stromab des Katalysators geben Auskunft über die Pufferwirkung des gespeicherten Sauerstoffs und korrelieren mit der 3-Wege-Aktivität des Katalysators. Ein entsprechendes Verfahren zur Ermittlung einer Katalysatorschädigung in einer einflutigen Abgasanlage ist beispielsweise aus US 6,470,674 B1 bekannt, wobei dem Katalysator jeweils ein sauerstoffsensitiver Gassensor vor- und nachgeschaltet ist.

Soll die Sauerstoffspeicherfähigkeit von Katalysatoren bei mehrflutigen Abgasanlagen ermittelt werden, so ergeben sich Probleme, sofern nicht jedem Katalysator eine gleichartige Sensorik nachgeschaltet ist, so dass die bekannten Verfahren anwendbar sind. So ist eine Ermittlung der Sauerstoffspeicherfähigkeit nicht möglich, wenn hinter den letzten Katalysatoren eines jeden Pfades eine Abgaszusammenführung erfolgt und zumindest ein Teil der Sensorik erst hinter dieser Zusammenführung angeordnet ist. Wenn überdies noch die detektierende Sensorik vom Arbeitsverfahren her zwischen unterschiedlichen Pfaden abweicht, ist die Anwendung bekannter Verfahren ebenfalls nicht mehr möglich.

EP 1 143 131 A2 beschreibt ein Verfahren zur Regelung einer Verbrennungskraftmaschine mit einer teilweise mehrflutigen Abgasanlage, insbesondere zur Regelung von Regenerationen von NOₓ-Speicherkatalysatoren, die in den Abgassträngen angeordnet sind. Gemäß einer Ausführung ist in mindestens einem Teilstrang einem der Katalysatoren eine Lambdasonde nachgeschaltet und stromab einer hinter den Katalysatoren liegenden Zusammenführungsstelle ein NOₓ-Sensor.

Es ist daher Aufgabe der Erfindung, ein Verfahren und eine Vorrichtung zur Ermittlung der Sauerstoffspeicherfähigkeit von Katalysatoren in mehrflutigen Abgasanlagen mit nachgeschalteter, für die einzelnen Pfade unterschiedlich ausgelegter Sensorik zu schaffen.

Diese Aufgabe wird durch ein Verfahren und eine Vorrichtung mit den im Anspruch 1 beziehungsweise Anspruch 8 gekennzeichneten Merkmalen gelöst.

Bei dem Verfahren zur Ermittlung der Sauerstoffspeicherfähigkeit von Katalysatoren in mehrflutigen Abgasanlagen mit zumindest zwei Abgassträngen, wobei in jedem Abgasstrang zumindest ein Katalysator angeordnet ist, mit nachgeschalteter, für die einzelnen Abgasstränge unterschiedlich ausgelegter Sensorik, werden erfindungsgemäß die einzelnen Abgasstränge mit einem mittleren Lambdawert beaufschlagt, wobei in den Abgassträngen jeweils eine unterschiedlich definierte Frequenz und Amplitude gegeben sind, die derart gewählt sind, dass sich rechnerisch über alle Abgasstränge wieder der mittlere Lambdawert ergibt. Ein erster sauerstoffsensitiver Gassensor ist in mindestens einem der Abgasstränge stromab eines Katalysators und ein zweiter sauerstoffsensitiver Gassensor ist stromab der Zusammenführung der Abgasstränge zur Messung der Lambdaverläufe angeordnet, mittels derer die jeweilige Sauerstoffspeicherfähigkeit der in den Abgassträngen befindlichen Katalysatoren bewertet wird.

Vorzugsweise wird als erster Gassensor eine Breitband-Lambdasonde oder ein NOₓ-Sensor oder auch eine Sprungantwort-Lambdasonde und für den zweiten Gassensor eine Breitband-Lambdasonde oder ein NOₓ-Sensor verwendet.

Vorzugsweise wird die Sauerstoffspeicherfähigkeit von NOₓ-Speicherkatalysatoren ermittelt.

Wird das erfindungsgemäße Verfahren beispielsweise bei einer Abgasanlage mit zwei Abgassträngen angewendet, so werden beide Abgasstränge mit gleicher Frequenz, jedoch alternierenden Amplituden, vorzugsweise bei einem mittleren Lambdawert von 1 beaufschlagt. Hat der erste Abgasstrang eine Lambdaauslenkung von beispielsweise +3 %, so wird der zweite Abgasstrang zum gleichen Zeitpunkt mit -3 % beaufschlagt, so dass sich im Mittel wiederum Lambda = 1 einstellt.

Frequenz und Amplitude werden derart gewählt, dass bei dem stromab der Zusammenführung der Abgasstränge liegenden Gassensor so lange keine Auslenkung gemessen wird, wie die Sauerstoffspeicherfähigkeit (OSC) beider Katalysatoren noch hinreichend groß ist. Die Bestimmung günstiger Werte für die Frequenz und Amplitude werden nach bekannten Verfahren gemäß dem Stand der Technik ermittelt. Sofern die OSC der Katalysatoren gleichmäßig abnimmt, bleibt der mittlere Lambdawert bei 1 und es wird keine Auslenkung gemessen. Nimmt jedoch die OSC eines Katalysators in einem Abgasstrang stärker ab als in einem anderen, so werden am Gassensor entsprechende Auslenkungen gemessen, da das mittlere Abgas in der Zusammenführung nicht stets 1 ist.

Mit dem erfindungsgemäßen Verfahren lassen sich vorteilhafterweise OSC-Unterschiede zwischen den Katalysatoren messen. Zur Ermittlung des absoluten OSC-Levels kann entweder die üblicherweise in einem der Pfade vorhandene Sensorik herangezogen werden oder die Beaufschlagung mit der genannten Zwangsamplitude wird nur für einen Pfad durchgeführt, während der andere mit Lambda = 1 betrieben wird.

Idealerweise sollte der Abgasmassenstrom in beiden Pfaden gleich groß sein. Die Abgasrückführungsrate und gegebenenfalls die Drosselklappen, Ladungsbewegungsklappen, Nockenwellensteller und Ladedruckregler sind entsprechend einzustellen.

Die erfindungsgemäße Vorrichtung zur Durchführung des Verfahrens zur Ermittlung der Sauerstoffspeicherfähigkeit von Katalysatoren, vorzugsweise von NOₓ₋Speicherkatalysatoren in mehrflutigen Abgasanlagen mit zumindest zwei Abgassträngen, wobei in jedem Abgasstrang zumindest ein Katalysator angeordnet ist, mit nachgeschalteter, für die einzelnen Abgasstränge unterschiedlich ausgelegter Sensorik, weist Mittel zur Messung von Sauerstoff im Abgas auf, wobei ein erster sauerstoffsensitiver Gassensor in mindestens einem der Abgasstränge stromab eines Katalysators und ein zweiter sauerstoffsensitiver Gassensor stromab der Zusammenführung der Abgasstränge angeordnet ist, Mittel, mit denen separat in den einzelnen Abgassträngen abgasrelevante Maßnahmen durch Beeinflussung der Betriebsparameter einer Verbrennungskraftmaschine ergriffen werden können, wobei die Mittel vorzugsweise den Lambdaverlauf in den Abgassträngen beeinflussen, und Mittel zur Auswertung der mit den Gassensoren ermittelten Lambdaverläufe, vorzugsweise ein Steuergerät, das in ein Motorsteuergerät integriert sein kann.

Vorzugsweise wird als erster Gassensor eine Breitband-Lambdasonde oder ein NOₓ-Sensor oder auch eine Sprungantwort-Lambdasonde und für den zweiten Gassensor eine Breitband-Lambdasonde oder ein NOₓ-Sensor verwendet.

Weitere bevorzugte Ausgestaltungen der Erfindung ergeben sich aus den übrigen, in den Unteransprüchen genannten Merkmalen.

Die Erfindung wird nachfolgend anhand eines Ausführungsbeispieles gemäß der zugehörigen Zeichnungen näher erläutert. Es zeigen:
- Figur 1: in einer schematischen Darstellung eine Verbrennungskraftanlage mit zweiflutiger Abgasanlage und
- Figur 2: eine Aufstellung der Lambdaverläufe der sauerstoffsensitiven Gassensoren gemäß Figur 1.

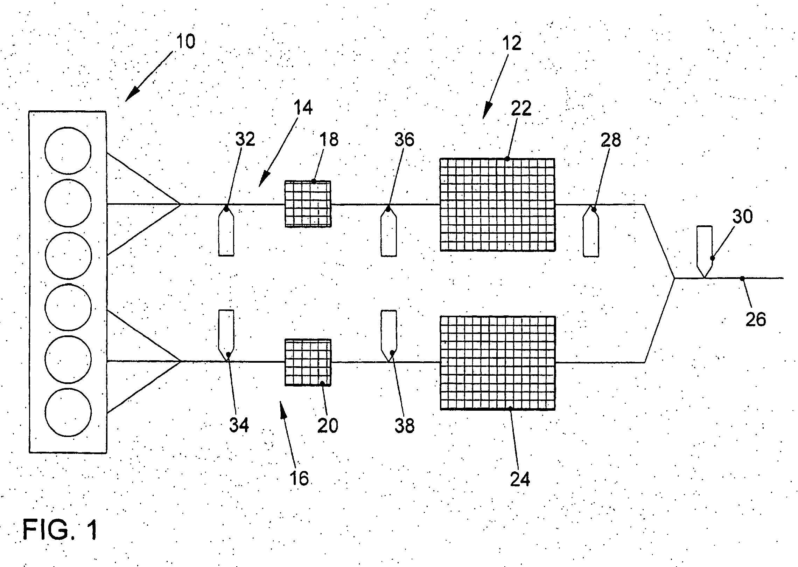

In Figur 1 ist eine Verbrennungskraftanlage 10 mit einer zweiflutigen Abgasanlage 12 dargestellt. In einem ersten und zweiten Abgasstrang 14, 16 der Abgasanlage 12, deren Lambdawerte separat einstellbar sind, sind jeweils ein Vorkatalysator 18, 20 und ein NOₓ₋Speicherkatalysator 22, 24 angeordnet. Stromab der NOₓ-Speicherkatalysatoren 22, 24 werden beide Abgasstränge 14, 16 zu einem Abgasstrang 26 zusammengeführt. Ein erster Gassensor 28 befindet sich stromab des einen Speicherkatalysators 22 im ersten Abgasstrang 14. Im zusammengeführten Abgasstrang 26, das heißt hinter der Zusammenführung der beiden Abgasstränge 14, 16, ist ein zweiter Gassensor 30 befindlich. Weiterhin sind jeweils stromauf und stromab der Vorkatalysatoren 18, 20 Lambda-Sonden 32, 34 beziehungsweise 36, 38 vorgesehen. Ansonsten weisen die Abgasstränge 14, 16 beziehungsweise der zusammengeführte Abgasstrang 26 der Abgasanlage 12 weitere übliche, hier jedoch nicht dargestellte Gassensoren und/oder Temperatursensoren zur Regelung der Verbrennungskraftanlage 10 auf. Die Signale der verschiedenen Sonden und Sensoren werden an ein nicht dargestelltes Steuergerät übermittelt, in welchem diese zur Ermittlung der Sauerstoffspeicherfähigkeit und zur Steuerung der Betriebsarten der Verbrennungskraftanlage 10 herangezogen werden.

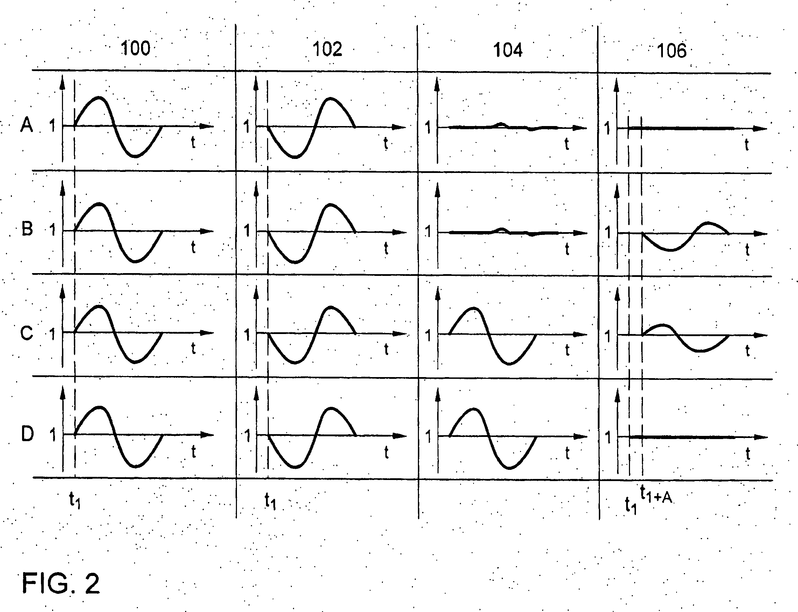

In Figur 2 sind die eingestellten Lambdaverläufe in den Abgassträngen 14, 16, die mit den Lambda-Sonden 36, 38 vor den NOₓ-Speicherkatalysatoren 22, 24 überwacht werden, sowie die Lambdaverläufe des ersten und des zweiten Gassensors 28, 30 für die möglichen Kombinationen A bis D von ungeschädigten beziehungsweise geschädigten NOₓ₋Speicherkatalysatoren 22, 24 dargestellt. Die Graphen 100 und 102 für die Kombinationen A bis D, die jeweils den Lambdaverlauf im ersten Abgasstrang 14 beziehungsweise zweiten Abgasstrang 16 vor dem NOₓ-Speicherkatalysator 22, 24 darstellen, sind für alle Kombinationen A bis D identisch. Zur Messung der Sauerstoffspeicherfähigkeit der NOₓ₋Speicherkatalysatoren 22, 24 werden die beiden Abgasstränge 14, 16 mit einem mittleren Lambda von 1 mit definierter Frequenz und Amplitude eingestellt, wobei die Amplituden des Lambdaverlaufs bei den Abgassträngen 14, 16 invers gewählt sind. Der Graph 104 stellt den Lambdaverlauf an dem ersten Gassensor 28 und der Graph 106 an dem zweiten Gassensor 30 dar. Aus dem Verlauf der Graphen 104, 106 ist ermittelbar, inwieweit einer oder beide NOₓ-Speicherkatalysatoren 22, 24 geschädigt sind. Bei der ersten Kombination A folgt der Graph 104 für den Lambdaverlauf an dem ersten Gassensor 28 nicht signifikant dem Graphen 100, das heißt < 20 % der Amplitude des Graphen 100, für den Lambdaverlauf vor dem Speicherkatalysator 22 im ersten Abgasstrang 14. Daraus folgt, dass der NOₓ₋Speicherkatalysator 22 allenfalls schwach geschädigt ist. Auch der Graph 106 für den Lambdaverlauf an dem zweiten Gassensor 30 wandert nur minimal um 1,00, das heißt < 10 % der Amplitude des Graphen 100 im ersten Abgasstrang 14 oder des Graphen 102 im zweiten Abgasstrang 16, woraus sich ergibt, dass auch der NOₓ-Speicherkatalysator 24 im zweiten Abgasstrang 16 allenfalls schwach geschädigt ist. Auch bei der zweiten Kombination B, deren Graph 104 für den Lambdaverlauf an dem ersten Gassensor 28 dem der Kombination A entspricht, ist der erste NOₓ-Speicherkatalysator 22 - wenn überhaupt - nur schwach geschädigt. Hingegen weist der Graph 106 für den Lambdaverlauf an dem zweiten Gassensor 30 einen deutlich, das heißt > 20 %, insbesondere > 30 % der Amplitude des Graphen 100 oder des Graphen 102 im ersten Abgasstrang 14 beziehungsweise im zweiten Abgasstrang 16 um 1,00 wandernden Lambdaverlauf auf. Dies zeigt eine deutliche Schädigung des NOₓ-Speicherkatalysators 24 im zweiten Abgasstrang 16 an, insbesondere dann, wenn der Lambdaverlauf an dem zweiten Gassensor 30 nur um die Abgaslaufzeit t_{A}, die sich aus der zeitlichen Differenz des Durchgangs des Graphen 100 beziehungsweise 102 durch 1 zum Zeitpunkt t, und des Durchgangs des Graphen 106 durch 1 zum Zeitpunkt t_{1+A} ergibt, vom Lambdaverlauf im zweiten Abgasstrang 16 vor dem NOₓ-Speicherkatalysator 24 abweicht. Gemäß der Kombination C ist nur der NOₓ-Speicherkatalysator 22 im ersten Abgasstrang 14 geschädigt. Hierbei wird am ersten Gassensor 28 ein deutlich, das heißt > 40 %, insbesondere > 60 % der Amplitude des Graphen 100 im ersten Abgasstrang 14, um 1,00 wandernder Lambdaverlauf des Graphen 104 gemessen, woraus folgt, dass der NOₓ-Speicherkatalysator 22 deutlich geschädigt ist. Der Graph 106 für den Lambdaverlauf an dem zweiten Gassensor 30 weist einen deutlich, das heißt > 20 %, insbesondere > 30 % der Amplitude des Graphen 100 oder des Graphen 102 im ersten Abgasstrang 14 beziehungsweise im zweiten Abgasstrang 16, um 1,00 wandernden Lambdaverlauf auf. Dies deutet eine allenfalls geringe Schädigung des NOₓ-Speicherkatalysators 24 im zweiten Abgasstrang 16 an, insbesondere dann, wenn der Lambdaverlauf am zweiten Gassensor 30 nur um die Abgaslaufzeit t_{A}, die sich aus der zeitlichen Differenz des Durchgangs des Graphen 100 beziehungsweise 102 durch 1 zum Zeitpunkt t₁ und des Durchgangs des Graphen 106 durch 1 zum Zeitpunkt t_{1+A} ergibt, vom Lambdaverlauf am ersten Gassensor 28 abweicht. Bei der letzten Kombination D sind beide NOₓ-Speicherkatalysatoren 22, 24 geschädigt. Hierbei wird am ersten Gassensor 28 ein deutlich, das heißt > 40 %, insbesondere > 60 % der Amplitude des Graphen 104 des ersten Gassensors 28 im ersten Abgasstrang 14, um 1,00 wandemder Lambdaverlauf gemessen, woraus folgt, dass der NOₓ-Speicherkatalysator 22 deutlich geschädigt ist. Der Lambdaverlauf am zweiten Gassensor 30 gemäß Graph 106 wandert geringfügig, das heißt < 10 % der Amplitude des Graphen 100 oder des Graphen 102 im ersten Abgasstrang 14 beziehungsweise im zweiten Abgasstrang 16, um 1,00, woraus eine deutliche Schädigung des NOₓ-Speicherkatalysators 24 im zweiten Abgasstrang 16 erkenntlich ist.

### BEZUGSZEICHENLISTE

- 10: Verbrennungskraftantage
- 12: Abgasanlage
- 14: erster Abgasstrang der Abgasanlage
- 16: zweiter Abgasstrang der Abgasanlage
- 18, 20: Vorkatalysator
- 22, 24: NOₓ-Speicherkatalysator
- 26: zusammengeführter Strang der Abgasanlage
- 28: erster Gassensor
- 30: zweiter Gassensor
- 32, 34, 36, 38: Lambda-Sonde

- 100: Graph für den Lambdaverlauf im ersten Abgasstrang der Abgasanlage
- 102: Graph für den Lambdaverlauf im zweiten Abgasstrang der Abgasanlage
- 104: Graph für den Lambdaverlauf an dem ersten Gassensor
- 106: Graph für den Lambdaverlauf an dem zweiten Gassensor

- A, B, C, D: verschiedene Kombinationen von geschädigten und ungeschädigten NOₓ-Speicherkatalysatoren

- t_{A}: Abgaslaufzeit
- t,: Zeitpunkt
- t_{1+A}: Zeitpunkt

## Patentansprüche

1. Verfahren zur Ermittlung der Sauerstoffspeicherfähigkeit von Katalysatoren in mehrflutigen Abgasanlagen (12) einer Verbrennungskraftmaschine (10) mit zumindest zwei Abgassträngen (14, 16), wobei in jedem Abgasstrang (14, 16) zumindest ein Katalysator (22, 24) mit nachgeschalteter, für die einzelnen Abgasstränge (14, 16) unterschiedlich ausgelegter Sensorik angeordnet ist und wobei die Abgasstränge (14, 16) stromab der Katalysatoren (22, 24) zusammengeführt werden, **dadurch gekennzeichnet, dass** die einzelnen Abgasstränge (14, 16) mit einem mittleren Lambdawert beaufschlagt werden, wobei in den Abgassträngen (14, 16) jeweils eine unterschiedlich definierte Frequenz und Amplitude des Lambdaverlaufs oder die gleiche Frequenz und inverse Amplituden gegeben sind und die Frequenz und Amplitude derart gewählt sind, dass sich rechnerisch stromab der Zusammenführung der mittlere Lambdawert ergibt, dass ein erster sauerstoffsensitiver Gassensor (28) in mindestens einem der Abgasstränge (14, 16) stromab eines Katalysators (22) und ein zweiter sauerstoffsensitiver Gassensor (30) stromab der Zusammenführung der Abgasstränge (14, 16) zur Messung der Lambdaverläufe angeordnet sind, und dass mittels der Lambdaverläufe der Gassensoren (28, 30) die jeweilige Sauerstoffspeicherfähigkeit der in den Abgassträngen (14, 16) befindlichen Katalysatoren (22, 24) bewertet wird, wobei eine Abweichung des Lambdaverlaufs des zweiten Gassensors (30) von dem mittleren Lambdawert unterschiedliche Sauerstoffspeicherfähigkeiten der Katalysatoren (22, 24) anzeigt.

2. Verfahren nach Anspruch 1, **dadurch gekennzeichnet, dass** als erster Gassensor (28) eine Breitband- oder Sprungantwort-Lambdasonde oder ein NOₓ-Sensor und als zweiter Gassensor (30) eine Breitband-Lambdasonde oder ein NOₓ-Sensor verwendet wird.

3. Verfahren nach einem der vorhergehenden Ansprüche, **dadurch gekennzeichnet, dass** die Abgasanlage (12) zwei Abgasstränge (14, 16) aufweist und dass beide Abgasstränge (14, 16) mit gleicher Frequenz, jedoch alternierenden Amplituden beaufschlagt werden.

4. Verfahren nach einem der vorhergehenden Ansprüche, **dadurch gekennzeichnet, dass** der mittlere Lambdawert bei 1 liegt.

5. Verfahren nach einem der vorhergehenden Ansprüche, **dadurch gekennzeichnet, dass** nur ein Abgasstrang (14, 16) mit einer Amplitude des Lambdawertes beaufschlagt wird, während der andere Abgasstrang (14, 16) mit Lambda = 1 betrieben wird.

6. Verfahren nach einem der vorhergehenden Ansprüche, **dadurch gekennzeichnet, dass** der Abgasmassenstrom in beiden Abgassträngen (14, 16) gleich groß ist.

7. Verfahren nach einem der vorhergehenden Ansprüche, **dadurch gekennzeichnet, dass** die Sauerstoffspeicherfähigkeit von NOₓ-Speicherkatalysatoren (22, 24) ermittelt wird.

8. Vorrichtung zur Ermittlung der Sauerstoffspeicherfähigkeit von Katalysatoren in mehrflutigen Abgasanlagen (12) einer Verbrennungskraftmaschine (10) mit zumindest zwei Abgassträngen (14, 16), wobei in jedem Abgasstrang (14, 16) zumindest ein Katalysator (22, 24) mit nachgeschalteter, für die einzelnen Abgasstränge (14, 16) unterschiedlich ausgelegter Sensorik angeordnet ist und wobei die Abgasstränge (14, 16) stromab der Katalysatoren (22, 24) zusammengeführt werden, **dadurch gekennzeichnet, dass** die Vorrichtung Mittel zur Messung von Sauerstoff im Abgas aufweist, umfassend einen ersten, in mindestens einem der Abgasstränge (14) stromab des Katalysators (22) angeordneten sauerstoffsensitiven Gassensor (28) und einen zweiten, stromab der Zusammenführung der Abgasstränge (14, 16) angeordneten sauerstoffsensitiven Gassensor (30), sowie Mittel, mit denen separat in den einzelnen Abgassträngen (14, 16) abgasrelevante Maßnahmen durch Beeinflussung der Betriebsparameter einer Verbrennungskraftmaschine ergriffen werden derart, dass die einzelnen Abgasstränge (14, 16) mit einem mittleren Lambdawert beaufschlagt werden, wobei in den Abgassträngen (14, 16) jeweils eine unterschiedlich definierte Frequenz und Amplitude des Lambdaverlaufs oder die gleiche Frequenz und inverse Amplituden gegeben sind und die Frequenz und Amplitude derart gewählt sind, dass sich rechnerisch stromab der Zusammenführung der mittlere Lambdawert ergibt, und Mittel zur Auswertung der mit den Gassensoren (28, 30) ermittelten Lambdaverläufe, wobei eine Abweichung des Lambdaverlaufs des zweiten Gassensors (30) von dem mittleren Lambdawert unterschiedliche Sauerstoffspeicherfähigkeiten der Katalysatoren (22, 24) anzeigt.

9. Vorrichtung nach Anspruch 8, **dadurch gekennzeichnet, dass** der erste Gassensor (28) eine Breitband- oder Sprungantwort-Lambdasonde oder ein NOₓ-Sensor ist und der zweite Gassensor (30) eine Breitband-Lambdasonde oder ein NOₓ-Sensor.

10. Vorrichtung nach einem der Ansprüche 8 und 9, **dadurch gekennzeichnet, dass** die Mittel zur separaten Beeinflussung der einzelnen Abgasstränge (14, 16) den Lambdaverlauf in den Abgassträngen (14, 16) beeinflussen.

11. Vorrichtung nach einem der Ansprüche 8 bis 10, **dadurch gekennzeichnet, dass** ein Mittel zur Auswertung der mit den Gassensoren (28, 30) ermittelten Lambdaverläufe ein Steuergerät, das in ein Motorsteuergerät integriert sein kann, ist.

12. Vorrichtung nach einem der Ansprüche 8 bis 11, **dadurch gekennzeichnet, dass** die Katalysatoren (22, 24) NOₓ-Speicherkatalysatoren sind.

## Claims

1. Method for determining the oxygen storage capacity of catalytic converters in multiple exhaust systems (12) of an internal combustion engine (10) having at least two exhaust trains (14, 16), at least one catalytic converter (22, 24) with downstream sensor means, which are designed differently for the individual exhaust trains (14, 16), being arranged in each exhaust train (14, 16), and the exhaust trains (14, 16) being combined downstream of the catalytic converters (22, 24), **characterized in that** the individual exhaust trains (14, 16) are acted up by a mean lambda value, in each case a differently defined frequency and amplitude of the lambda profile or the same frequency and inverse amplitudes being provided in the exhaust trains (14, 16), and the frequency and amplitude being selected in such a manner that in arithmetical terms the mean lambda value results downstream of the point at which the trains are combined, **in that** a first oxygen-sensitive gas sensor (28) is arranged in at least one of the exhaust trains (14, 16) downstream of a catalytic converter (22), and a second oxygen-sensitive gas sensor (30) is arranged downstream of the point at which the exhaust trains (14, 16) are combined, in order to measure the lambda profiles, and **in that** the respective oxygen storage capacity of the catalytic converters (22, 24) located in the exhaust trains (14, 16) is evaluated by means of the lambda profiles of the gas sensors (28, 30), a deviation in the lambda profile of the second gas sensor (30) from the mean lambda value indicating different oxygen storage capacities of the catalytic converters (22, 24).

2. Method according to Claim 1, **characterized in that** the first gas sensor (28) used is a wide-band or step-response lambda sensor or an NOₓ sensor and the second gas sensor (30) used is a wide-band lambda sensor or an NOₓ sensor.

3. Method according to one of the preceding claims, **characterized in that** the exhaust system (12) has two exhaust trains (14, 16), and **in that** both exhaust trains (14, 16) are acted on by the same frequency but alternating amplitudes.

4. Method according to one of the preceding claims, **characterized in that** the mean lambda value is 1.

5. Method according to one of the preceding claims, **characterized in that** only one exhaust train (14, 16) is acted on by an amplitude of the lambda value, while the other exhaust train (14, 16) is operated at lambda = 1.

6. Method according to one of the preceding claims, **characterized in that** the exhaust gas mass flow is identical in both exhaust trains (14, 16).

7. Method according to one of the preceding claims, **characterized in that** the oxygen storage capacity of NOₓ storage catalytic converters .(22, 24) is determined.

8. Apparatus for determining the oxygen storage capacity of catalytic converters in multiple exhaust systems (12) of an internal combustion engine (10) having at least two exhaust trains (14, 16), at least one catalytic converter (22, 24) with downstream sensor means, which are designed differently for the individual exhaust trains (14, 16), being arranged in each exhaust train (14, 16), and the exhaust trains (14, 16) being combined downstream of the catalytic converters (22, 24), **characterized in that** the apparatus has means for measuring oxygen in the exhaust gas, comprising a first oxygen-sensitive gas sensor (28), which is arranged in at least one of the exhaust trains (14) downstream of the catalytic converter (22), and a second oxygen-sensitive gas sensor (30), which is arranged downstream of the point at which the exhaust trains (14, 16) are combined, as well as means by which exhaust-relevant measures are taken separately in the individual exhaust trains (14, 16) by influencing the operating parameters of an internal combustion engine, in such a manner that the individual exhaust trains (14, 16) are acted on by a mean lambda value, in each case a differently defined frequency and amplitude of the lambda profile or the same frequency and inverse amplitudes being provided in the exhaust trains (14, 16), and the frequency and amplitude being selected in such a manner that in arithmetical terms the mean lambda value is produced downstream of the point at which the trains are combined, and means for evaluating the lambda profiles determined by the gas sensors (28, 30), a deviation in the lambda profile of the second gas sensor (30) from the mean lambda value indicating different oxygen storage capacities of the catalytic converters (22, 24).

9. Apparatus according to Claim 8, **characterized in that** the first gas sensor (28) is a wide-band or step-response lambda sensor or an NOₓ sensor, and the second gas sensor (30) is a wide-band lambda sensor or an NOₓ sensor.

10. Apparatus according to either of Claims 8 and 9, **characterized in that** the means for separately influencing the individual exhaust trains (14, 16) influence the lambda profile in the exhaust trains (14, 16).

11. Apparatus according to one of Claims 8 to 10, **characterized in that** a means for evaluating the lambda profiles determined by the gas sensors (28, 30) is a control unit, which may be integrated in an engine control unit.

12. Apparatus according to one of Claims 8 to 11, **characterized in that** the catalytic converters (22, 24) are NOₓ storage catalytic converters.

## Revendications

1. Procédé en vue de la détermination de la capacité de stockage d'oxygène de catalyseurs dans des installations de gaz d'échappement multitubes (12) d'un moteur à combustion interne (10), ayant au moins deux lignes de gaz d'échappement (14, 16), au moins un catalyseur (22, 24), avec un système à capteurs intercalé à la suite et de conception différente pour les lignes d'échappement individuelles (14, 16), étant disposé dans chaque ligne d'échappement (14, 16), et les lignes d'échappement (14, 16) étant combinées en aval des catalyseurs (22, 24), **caractérisé en ce que** les lignes d'échappement individuelles (14, 16) sont chargées avec une valeur lambda moyenne, une fréquence et une amplitude de la courbe/du déroulement lambda définies à chaque fois de manière différente ou la même fréquence et des amplitudes inverses étant données dans les lignes d'échappement (14, 16) et la fréquence et l'amplitude étant sélectionnées de telle sorte que, par calcul, en aval de la combinaison, on obtient la valeur lambda moyenne, de telle sorte que l'on dispose, dans au moins une des lignes d'échappement (14, 16), en aval d'un catalyseur (22), un premier capteur de gaz sensible à l'oxygène (28) et, en aval de la combinaison des lignes d'échappement (14, 16), un deuxième capteur de gaz sensible à l'oxygène (30), en vue de la mesure des courbes lambda, et de telle sorte que l'on évalue, grâce aux courbes lambda des capteurs de gaz (28, 30), la capacité de stockage d'oxygène correspondante des catalyseurs (22, 24) se trouvant dans les lignes d'échappement (14, 16), une déviation de la courbe lambda du deuxième capteur de gaz (30) de la valeur lambda moyenne indiquant des capacités de stockage d'oxygène différentes des catalyseurs (22, 24).

2. Procédé selon la revendication 1, **caractérisé en ce que** l'on utilise, en tant que premier capteur de gaz (28), une sonde lambda à large bande ou à réponse en saut ou un capteur NOₓ et, en tant que deuxième capteur de gaz (30), une sonde lambda à large bande ou un capteur NOₓ.

3. Procédé selon l'une quelconque des revendications précédentes, **caractérisé en ce que** l'installation de gaz d'échappement (12) présente deux lignes d'échappement (14, 16) et **en ce que** les deux lignes d'échappement (14, 16) sont chargées à la même fréquence, avec, toutefois, des amplitudes alternantes.

4. Procédé selon l'une quelconque des revendications précédentes, **caractérisé en ce que** la valeur lambda moyenne est 1.

5. Procédé selon l'une quelconque des revendications précédentes, **caractérisé en ce qu'**une ligne d'échappement (14, 16) seulement est chargée avec une amplitude de la valeur lambda, alors que l'autre ligne d'échappement (14, 16) est opérée avec lambda = 1.

6. Procédé selon l'une quelconque des revendications précédentes, **caractérisé en ce que** le courant massique de gaz d'échappement dans les deux lignes d'échappement (14, 16) est de la même taille.

7. Procédé selon l'une quelconque des revendications précédentes, **caractérisé en ce que** la capacité de stockage d'oxygène des catalyseurs accumulateurs de NOₓ (22, 24) est déterminée.

8. Dispositif en vue de la détermination de la capacité de stockage d'oxygène de catalyseurs dans des installations de gaz d'échappement multitubes (12) d'un moteur à combustion interne (10), ayant au moins deux lignes de gaz d'échappement (14, 16), au moins un catalyseur (22, 24), avec un système à capteurs intercalé à la suite et de conception différente pour les lignes d'échappement individuelles (14, 16), étant disposé dans chaque ligne d'échappement (14, 16), et les lignes d'échappement (14, 16) étant combinées en aval des catalyseurs (22, 24), **caractérisé en ce que** le dispositif présente des moyens en vue de la mesure de l'oxygène dans le gaz d'échappement, comprenant un premier capteur de gaz sensible à l'oxygène (28), disposé en aval du catalyseur (22) dans au moins une des lignes d'échappement (14, 16) et un deuxième capteur de gaz sensible à l'oxygène (30), disposé en aval de la combinaison des lignes d'échappement (14, 16), ainsi que des moyens grâce auxquels on prend, de manière séparée, dans les lignes d'échappement individuelles (14, 16), les mesures pertinentes en terme de gaz d'échappement en influençant les paramètres opératoires d'un moteur à combustion interne, de telle sorte que les lignes d'échappement individuelles (14, 16) soient chargées avec une valeur lambda moyenne, une fréquence et une amplitude de la courbe lambda définies à chaque fois de manière différente ou la même fréquence et des amplitudes inverses étant données dans les lignes d'échappement (14, 16) et la fréquence et l'amplitude étant sélectionnées de telle sorte que, par calcul, en aval de la combinaison, la valeur lambda moyenne s'établisse, et des moyens en vue de l'évaluation des courbes lambda déterminés à l'aide des capteurs de gaz (28, 30), une déviation de la courbe lambda du deuxième capteur de gaz (30) de la valeur lambda moyenne indiquant des capacités de stockage d'oxygène différentes des catalyseurs (22, 24).

9. Dispositif selon la revendication 8, **caractérisé en ce que** le premier capteur de gaz (28) est une sonde lambda à large bande ou à réponse en saut ou un capteur de NOₓ et **en ce que** le deuxième capteur de gaz (30) est une sonde lambda à large bande ou un capteur de NOₓ.

10. Dispositif selon l'une quelconque des revendications 8 et 9, **caractérisé en ce que** les moyens en vue de la prise d'influence séparée des lignes d'échappement individuelles (14, 16) influencent la courbe lambda dans les lignes d'échappement (14, 16).

11. Disposition selon l'une quelconque des revendications 8 à 10, **caractérisé en ce qu'**un moyen en vue de l'évaluation des courbes lambda déterminés à l'aide des capteurs de gaz (28, 30) est un appareil de contrôle qui peut être intégré dans un appareil de commande du moteur.

12. Disposition selon l'une quelconque des revendications 8 à 11, **caractérisé en ce que** les catalyseurs (22, 24) sont des catalyseurs accumulateurs de NOₓ.
